# EUROPEAN PATENT SPECIFICATION

(11) **EP 2 757 291 B1**
(45) Date of publication and mention of the grant of the patent: **29.03.2017**
(21) Application number: 12831232.9
(22) Date of filing: 10.08.2012
(51) Int. Cl.: F16J 15/06, F16J 15/10, F16J 15/48

(54) **GASKET AND SEALING STRUCTURE**
DICHTUNG UND ABDICHTUNGSSTRUKTUR
JOINT ET STRUCTURE D'ÉTANCHÉITÉ

(30) Priority: 13.09.2011 JP 2011199670; 29.03.2012 JP 2012076872
(43) Date of publication of application: 23.07.2014
(73) Proprietor: NOK Corporation, Tokyo 105-8585 (JP)
(72) Inventor: NAGATA Atsushi, Aso-shi Kumamoto 869-2231 (JP); USHIJIMA Shinji, Kitaibaraki-shi Ibaraki 319-1535 (JP); MUKAI Shingo, Aso-shi Kumamoto 869-2231 (JP); HAYASHI Eizo, Aso-shi Kumamoto 869-2231 (JP)
(74) Representative: TBK
(86) International application number: PCT/JP2012/070422
(87) International publication number: WO 2013/038855

(56) References cited:
- EP-A1- 0 153 769
- EP-A1- 0 781 951
- WO-A1-86/04656
- WO-A1-2008/052781
- DE-A1- 3 414 180
- JP-A- 2000 329 230
- JP-A- 2003 202 080
- JP-U- S61 186 722
- JP-U- S63 126 674
- US-A- 2 467 061
- US-A1- 2003 098 548

## Description

### Technical Field

The present invention relates to a gasket and a sealing structure sealing a gap between two members.

### Background Art

Recently, for the purpose of simplification of manufacturing processes, an attaching groove provided in a casting component such as an aluminum die-casting is not subjected to a surface treatment and is used as an attaching groove for a gasket as it is in some cases. However, in a case of a casting component, an intact casting surface that is not subjected to a surface treatment has a fine irregular surface and is provided with a relatively large recess such as porosity. Thus, a general gasket cannot exert a sealing function.

Under such circumstances, conventionally adopted are methods of using fluid gasket, forming a sealing surface in an arc to secure a large area (refer to Patent Literature 1), and providing a double sealing line (refer to Patent Literature 2).

However, a case of using fluid gasket causes a problem of a temporal decrease in sealing performance. Also, in a case of enlarging a sealing surface or providing a double sealing line, the gasket is inclined or deformed in an environment in which sealing fluid pressure is applied to the gasket, which may prevent stable sealing performance from being exerted.

EP 0 153 769 A1 discloses a sealing arrangement according to the preamble of claims 1 and 5.

EP0 781 951 A1 and US 2003/098548 A1 also disclose similar sealing structures. DE 34 14 180 A discloses a gasket according to the preamble of claim 1.

### Citation list

### Patent Literature

Patent Literature 1: JP 2011-94667 A
Patent Literature 2: JP 2010-244976 A
Patent Literature 3: JP 2011-117466 A

### Summary of Invention

### Technical Problem

An object of the present invention is to provide a gasket and a sealing structure enabling to exert stable sealing performance even in a case where a sealing target surface is a surface provided with irregularities such as a casting surface.

### Solution to Problem

The present invention has adopted the following means according to claim 1 to solve the above problems.

That is, a sealing structure according to the present invention includes two members at least either of which is provided with an attaching groove and a gasket made of a rubber-like elastic body attached to the attaching groove to seal a gap between these two members, and the gasket includes a first sealing surface coming into surface contact with a surface of a first member out of the two members, a second sealing surface coming into surface contact with a surface of a second member out of the two members, and a third sealing surface coming into surface contact with a side surface of the attaching groove on an opposite side of a side on which sealing fluid pressure is generated, and the first sealing surface, the second sealing surface, and the third sealing surface are formed in equal shapes to those of surfaces of opposed members which these sealing surfaces come into surface contact with in a state before the gasket receives an external force, respectively.

With the present invention, the first sealing surface, the second sealing surface, and the third sealing surface provided on the gasket made of the rubber-like elastic body come into surface contact with the surface of the first member out of the two members, the surface of the second member out of the two members, and the side surface of the attaching groove, respectively. Also, these sealing surfaces are formed in equal shapes to those of the surfaces of the opposed members which these sealing surfaces come into surface contact with in a state before the gasket receives an external force, respectively. Thus, even in a case where a sealing target surface is a surface provided with irregularities such as a casting surface, stable sealing performance can be exerted.

Also, the gasket is provided with a pressure receiving groove opened to a side receiving the sealing fluid pressure which is an opposite side of the third sealing surface and provided so as to be parallel to the first sealing surface and the second sealing surface.

In this manner, by providing the pressure receiving groove, the sealing fluid pressure is applied to an inner wall surface of the pressure receiving groove, and thus the first sealing surface and the second sealing surface are in a state of being pressed against the surface of the first member out of the two members and the surface of the second member out of the two members while the third sealing surface is in a state of being pressed against the side surface of the attaching groove. Accordingly, even in a case where a sealing target surface is a surface provided with irregularities such as a casting surface, stable sealing performance can be exerted. Also, since the pressure receiving groove is provided so as to be parallel to the first sealing surface and the second sealing surface, both compression rate and filling rate can be satisfied appropriately. Accordingly, there is no need for a large force at the time of assembling the two members and the gasket, and desired sealing performance can be obtained without deformation of the two members.

The side of the gasket receiving the sealing fluid pressure is provided with a plurality of projecting portions coming into close contact with a side surface of the attaching groove on the side on which the sealing fluid pressure is generated on both sides with the pressure receiving groove in-between for restricting coming off of the gasket from the attaching grooves at the time of assembling.

This can stabilize an attaching state of the gasket to the attaching groove and restrict coming off of the gasket. This can also stabilize sealing performance by the third sealing surface against the side surface of the attaching groove.

### Advantageous Effects of Invention

As described above, with the present invention, it is possible to exert stable sealing performance even in a case where a sealing target surface is a surface provided with irregularities such as a casting surface.

### Brief Description of Drawings

Fig. 1 is a plan view of a gasket according to Embodiment 1 not covered by the invention.
Fig. 2 is a cross-sectional view of the gasket according to Embodiment 1 not covered by the invention.
Fig. 3 is a schematic cross-sectional view of a sealing structure according to Embodiment 1 not covered by the invention.
Fig. 4 is a schematic cross-sectional view of a sealing structure according to Embodiment 1 not covered by the invention.
Fig. 5 is a schematic configuration view of a testing apparatus.
Fig. 6 is a schematic configuration view of a jig to be used in the testing apparatus.
Fig. 7 is a schematic cross-sectional view illustrating a state in which a test sample is put in the jig.
Fig. 8 is a plan view and a cross-sectional view of a gasket according to a comparative example.
Fig. 9 is a plan view of a gasket according to Embodiment 2 of the present invention.
Fig. 10 is a partial side view of an inside of the gasket according to Embodiment 2 of the present invention.
Fig. 11 is a cross-sectional view of the gasket according to Embodiment 2 of the present invention.
Fig. 12 is a schematic cross-sectional view of a sealing structure according to Embodiment 2 of the present invention.
Fig. 13 is a schematic cross-sectional view of a sealing structure according to Embodiment 2 of the present invention. Description of Embodiments

Hereinafter, embodiments will be described in details based on examples with reference to the drawings. It is to be noted that a dimension, a material, a shape, a relative layout, and the like of a component described in the embodiments are not intended to limit a scope of the present invention to these unless otherwise provided.

A gasket and a sealing structure according to the present embodiments can be applied to a component such as a transmission such as a CVT and an AT, an engine, and a water pump. That is, in such a component, the gasket and the sealing structure can be suitably applied to a sealing structure portion in which a casting component such as an aluminum die-casting is used.

### (Embodiment 1)

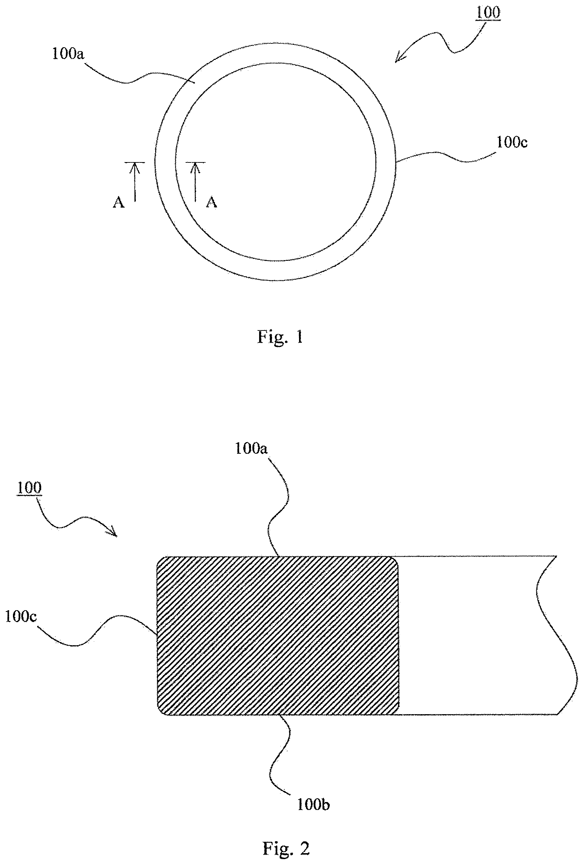

With reference to Figs. 1 to 8, a gasket and a sealing structure according to Embodiment 1 not covered by the invention will be described.

### <Gasket>

With reference to Figs. 1 and 2, a gasket 100 made of a rubber-like elastic body according to Embodiment 1 not covered by the invention will be described. Fig. 1 is a plan view of the gasket 100 according to Embodiment 1 not covered by the invention. Fig. 2 is a cross-sectional view of the gasket 100 according to Embodiment 1 not covered by the invention and a cross-sectional view along AA in Fig. 1.

In the gasket 100 according to the present embodiment, both surfaces (an upper surface and a lower surface in Fig. 2) are formed in flat surfaces. One of them functions as a first sealing surface 100a while the other functions as a second sealing surface 100b. Also, an external (an outer circumferential surface side) side surface (a left side surface in Fig. 2) out of both side surfaces of the gasket 100 functions as a third sealing surface 100c. This third sealing surface 100c is formed in a cylindrical surface.

### <Sealing Structure 1>

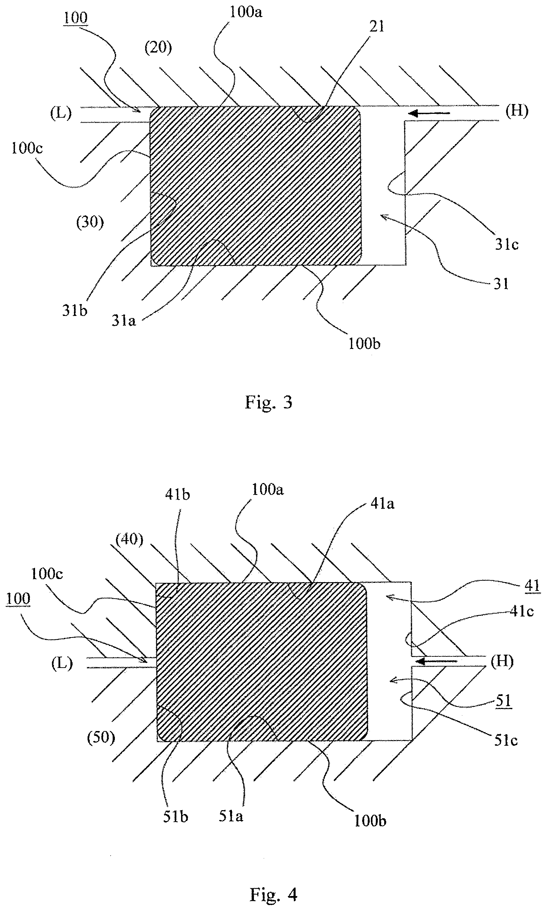

Referring to Fig. 3, an example of a sealing structure in which the gasket 100 according to the present embodiment is used will be described. In the example illustrated in Fig. 3, the gasket 100 is used to seal a gap between a case cover 20 (one member) and a case 30 (the other member). The gasket 100 is attached to an attaching groove 31 provided in the case 30. Also, in this example, the case 30 is a casting component, and a surface of the attaching groove 31 is not subjected to a process treatment and is a casting surface.

This attaching groove 31 is provided on a side of an opposed surface to the case cover 20 in the case 30.
The attaching groove 31 is formed in an annular shape having a rectangular cross-section, and the gasket 100 is formed of a sharp along this attaching groove 31. Also, the gasket 100 is attached in a state of being compressed by a groove bottom surface 31a of the attaching groove 31 and the case cover 20. In the present embodiment, fluid as a sealed target is sealed in an inside (an inner circumferential surface side) of the gasket 100. By doing so, in Fig. 3, a right side in the figure is a high pressure side (H) while a left side is a low pressure side (L). Also, the groove bottom surface 31a of the attaching groove 31 is formed in a flat surface, and an opposed surface 21 of the case cover 20 to the case 30 is also formed in a flat surface.

By the above configuration, the flat first sealing surface 100a of the gasket 100 entirely adheres tightly to the flat opposed surface 21 of the case cover 20, while the flat second sealing surface 100b of the gasket 100 entirely adheres tightly to the flat groove bottom surface 31a of the attaching groove 31. In this manner, the first sealing surface 100a is formed in an equal flat surface shape to that of a surface of the opposed surface 21 which this first sealing surface 100a comes into surface contact with in a state before the gasket 100 receives an external force. Similarly, the second sealing surface 100b is formed in an equal flat surface shape to that of a surface of the groove bottom surface 31a which this second sealing surface 100b comes into surface contact with in a state before the gasket 100 receives an external force.

Also, the third sealing surface 100c as an external side surface of the gasket 100 almost entirely adheres tightly to a side surface 31b of the attaching groove 31 on the low pressure side (L). As described above, the third sealing surface 100c of the gasket 100 is a cylindrical surface. The side surface 31b of the attaching groove 31 on the low pressure side (L) is formed in a cylindrical surface as well. In this manner, the third sealing surface 100c is formed in an equal cylindrical surface shape to that of a surface of the side surface 31b which this third sealing surface 100c comes into surface contact with in a state before the gasket 100 receives an external force.

As is apparent from Fig. 3, a cross-section of the gasket 100 according to the present embodiment is formed approximately in a rectangular shape. The gasket 100 except a side surface on the high pressure side (H) is adapted to almost entirely adhere tightly to sealing target surfaces (the groove bottom surface 31a of the attaching groove 31, the side surface 31b on the low pressure side (L), and the opposed surface 21 of the case cover 20).

Also, the side surface (inner circumferential surface) of the gasket 100 on the high pressure side (H) is in a state of receiving sealing fluid pressure.

### <Sealing Structure 2>

Referring to Fig. 4, another example of a sealing structure in which the gasket 100 according to the present embodiment is used will be described. In the example illustrated in Fig. 4, the gasket 100 is used to seal a gap between a case cover 40 (one member) and a case 50 (the other member). The gasket 100 is attached to attaching grooves 41 and 51 provided respectively in both the members. Also, in this example, the case cover 40 and the case 50 are casting components, and surfaces of the attaching grooves 41 and 51 are not subjected to a process treatment and are casting surfaces.

These attaching grooves 41 and 51 are provided on an opposed surface to the case 50 in the case cover 40 and on an opposed surface to the case cover 40 in the case 50, respectively. The attaching grooves 41 and 51 are formed in annular shapes having rectangular cross-sections, and the gasket 100 is formed of a sharp along these attaching grooves 41 and 51. Also, the gasket 100 is attached in a state of being compressed by a groove bottom surface 41a of the attaching groove 41 and a groove bottom surface 51a of the attaching groove 51. In the present embodiment, fluid as a sealed target is sealed in an inside (an inner circumferential surface side) of the gasket 100. By doing so, in Fig. 4, a right side in the figure is a high pressure side (H) while a left side is a low pressure side (L). Also, both the groove bottom surface 41a of the attaching groove 41 and the groove bottom surface 51a of the attaching groove 51 are formed in flat surfaces.

By the above configuration, the flat first sealing surface 100a of the gasket 100 entirely adheres tightly to the flat groove bottom surface 41a of the attaching groove 41 of the case cover 40, while the flat second sealing surface 100b of the gasket 100 entirely adheres tightly to the flat groove bottom surface 51a of the attaching groove 51 of the case 50. In this manner, the first sealing surface 100a is formed in an equal flat surface shape to that of a surface of the groove bottom surface 41a which this first sealing surface 100a comes into surface contact with in a state before the gasket 100 receives an external force. Similarly, the second sealing surface 100b is formed in an equal flat surface shape to that of a surface of the groove bottom surface 51a which this second sealing surface 100b comes into surface contact with in a state before the gasket 100 receives an external force.

Also, the third sealing surface 100c as an external side surface of the gasket 100 almost entirely adheres tightly to a side surface 41b of the attaching groove 41 on the low pressure side (L) and a side surface 51b of the attaching groove 51 on the low pressure side (L), respectively. As described above, the third sealing surface 100c of the gasket 100 is formed in a cylindrical surface. The side surface 41b of the attaching groove 41 on the low pressure side (L) and the side surface 51b of the attaching groove 51 on the low pressure side (L) are formed in cylindrical surfaces as well. In this manner, the third sealing surface 100c is formed in an equal cylindrical surface shape to those of surfaces of the side surfaces 41b and 51b which this third sealing surface 100c comes into surface contact with in a state before the gasket 100 receives an external force.

As is apparent from Fig. 4, a cross-section of the gasket 100 according to the present embodiment is formed approximately in a rectangular shape. The gasket 100 except a side surface on the high pressure side (H) is adapted to almost entirely adhere tightly to sealing target surfaces (the groove bottom surfaces 41a and 51a of the attaching grooves 41 and 51 and the side surfaces 41b and 51b on the low pressure side (L)).

Also, the side surface (inner circumferential surface) of the gasket 100 on the high pressure side (H) is in a state of receiving sealing fluid pressure.

### <Excellent Points of Gasket and Sealing Structures According to Present Embodiment>

As described above, with the present embodiment, the gasket 100 made of a rubber-like elastic body is configured to cause the first sealing surface 100a, the second sealing surface 100b, and the third sealing surface 100c of the gasket 100 to almost entirely adhere tightly to the sealing target surfaces. Meanwhile, since correspondence between each sealing surface and each sealing target surface is apparent from Figs. 3 and 4 and the above description, description thereof is omitted. The same is true of the following description.

Also, the first sealing surface 100a, the second sealing surface 100b, and the third sealing surface 100c are formed in equal shapes to those of the surfaces (sealing target surfaces) of the opposed members which these surfaces come into surface contact with in a state before the gasket 100 receives an external force, respectively. Further, since the side surface (inner circumferential surface) of the gasket 100 on the high pressure side (H) receives sealing fluid pressure, the first sealing surface 100a, the second sealing surface 100b, and the third sealing surface 100c are in a state of being pressed against the sealing target surfaces, respectively.

Accordingly, even in a case where the sealing target surface is a surface provided with irregularities such as a casting surface (even in a case where the sealing target surface is provided with porosity), the gasket 100 digs into the recess, an upper surface of the recess is covered with the gasket 100, and thus stable sealing performance can be exerted.

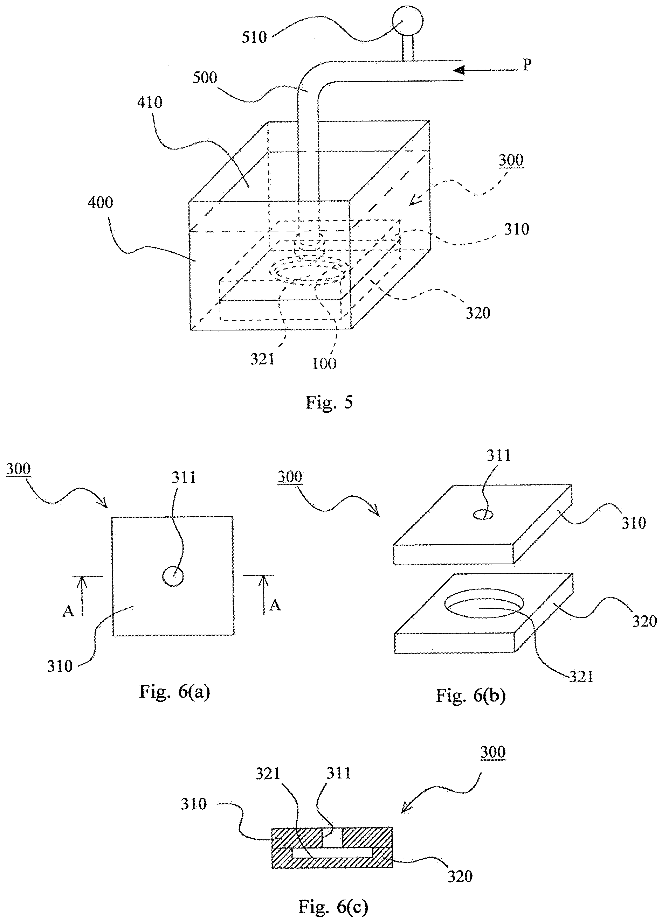

Here, referring to Figs. 5 to 8, a comparison test for comparison between the present embodiment and a comparative example and a test result will be described. Fig. 5 illustrates a schematic configuration of an entire testing apparatus, and Fig. 6 illustrates a schematic configuration of a jig to be arranged in the testing apparatus. Fig. 6(a) is a plan view of the jig, Fig. 6 (b) is an exploded perspective view of the jig, and Fig. 6(c) is a cross-sectional view (a cross-sectional view along AA in Fig. 6(a)) of the jig.

A jig 300 includes two metallic plate-like members. These plate-like members are hereinafter referred to as a first metal plate 310 and a second metal plate 320, respectively. The first metal plate 310 is provided with a through hole 311 through which air passes. The second metal plate 320 is provided with a circular hole 321 to which a test sample is to be attached. The first metal plate 310 is fixed to the second metal plate 320 in a state in which the test sample is attached to the circular hole 321 of the second metal plate 320. By doing so, the test sample is arranged in the jig 300 in a state of being compressed by the first metal plate 310 and the second metal plate 320.

Here, a surface of the circular hole 321 of the second metal plate 320 is a surface imitating a casting surface of Rz = 15.5 µm. Meanwhile, "Rz" is "a maximum height" defined by JIS. In JIS B2406, a side surface and a bottom surface of a groove to which a gasket is to be attached are specified to have Rz of 12.5 µm or less in a case of fixing on a flat surface and no pulsation. In the present test, sealing performance is tested under a condition of a rougher surface than that in this specification.

In a state in which the test sample is arranged in the jig 300 as described above, a tip of a pipe 500 adapted to supply air to the jig 300 is fixed in an opening of the through hole 311 of the first metal plate 310. In this state, the jig 300 is arranged in a water tank 400 in which water 410 is stored. A pressure gauge 510 is connected to the pipe 500 to enable to measure internal pressure of the jig 300.

In the testing apparatus configured as above, by visually checking whether or not bubbles are generated in the water tank 400 in a state in which predetermined internal pressure is applied, it is possible to test whether or not leakage occurs.

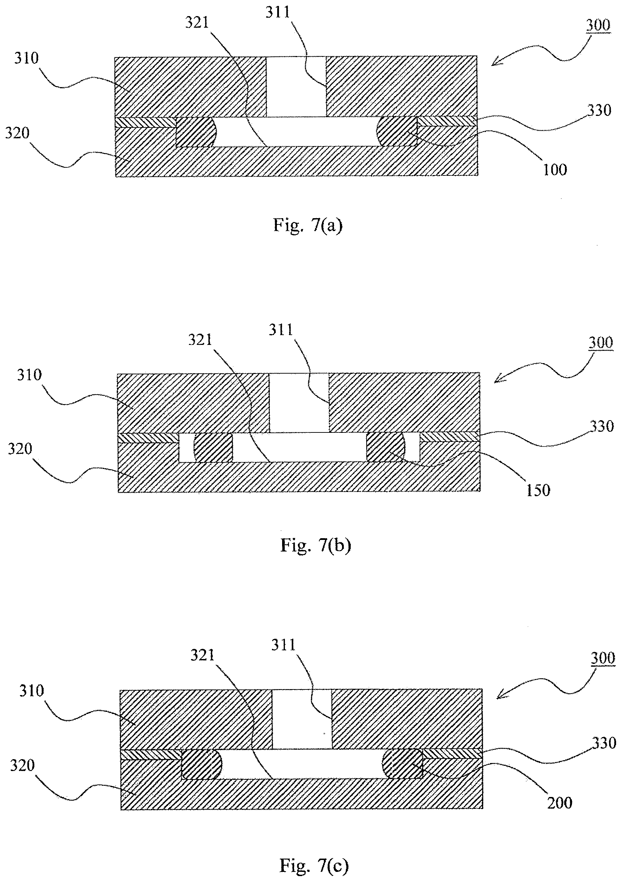

Next, the test sample will be described. A material for gaskets to be used for the present test was ethylene-propylene rubber (EPDM). Three kinds of gaskets were used as test samples. One is the gasket 100 according to the present embodiment. Fig. 7(a) is a schematic cross-sectional view illustrating a state in which this gasket 100 is attached to the jig 300. Meanwhile, dimensions of a rectangular cross-section of the gasket 100 are 3.3 mm x 3.3 mm.

Also, as Comparative Example 1, an annular gasket 150 having an approximately rectangular cross-section in a similar manner to the present embodiment and having a smaller diameter than that of the gasket 100 according to the present embodiment was used. An outer circumferential surface of this gasket 150 does not adhere tightly to an inner circumferential surface of the circular hole 321 of the second metal plate 320. That is, the gasket 150 according to Comparative Example 1 differs from the gasket 100 according to the present embodiment in that the gasket 150 does not have the third sealing surface. Fig. 7(b) is a schematic cross-sectional view illustrating a state in which this gasket 150 is attached to the jig 300. Meanwhile, dimensions of a rectangular cross-section of the gasket 150 are 3.3 mm x 3.3 mm.

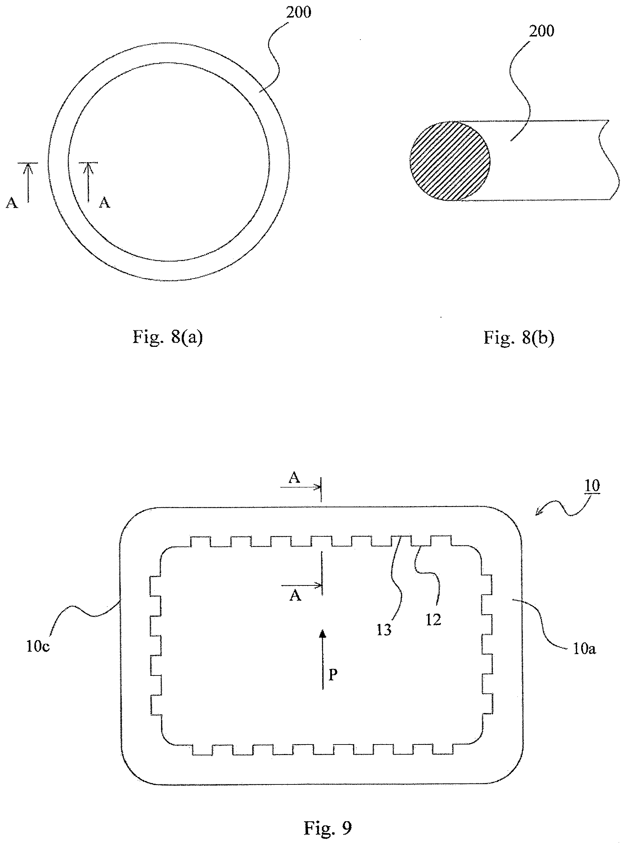

Further, as Comparative Example 2, a gasket 200 having a circular cross-section was used. Fig. 8 (a) is a plan view of the gasket 200 according to Comparative Example 2, and Fig. 8(b) is a cross-sectional view (a cross-sectional view along AA in Fig. 8 (a)) of this gasket 200. The gasket 200 according to Comparative Example 2 is configured so that an outer circumferential surface thereof may adhere tightly to the inner circumferential surface of the circular hole 321 of the second metal plate 320 in a similar manner to that of the gasket 100 according to the present embodiment. A cross-sectional shape of the gasket 200 according to Comparative Example 2 is circular. Thus, sealing surfaces of the gasket 200 are formed in different shapes to those of surfaces of opposed members which these sealing surfaces come into surface contact with in a state before the gasket 200 receives an external force. Meanwhile, a cross-section of the gasket 200 is a circle having a diameter of 3.3 mm.

With use of the testing apparatus and the test samples as above, minimum compression rate of each gasket in which sealing performance could be maintained (no leakage occurred) in a case where internal pressure was 500 kPa was measured. In the above jig 300, while compression rate of each gasket was changed by fixing the first metal plate 310 and the second metal plate 320 with each other in a state of sandwiching a spacer 330 having an arbitrary thickness between the metal plates, the aforementioned minimum compression rate was measured (refer to Fig. 7). Here, generally, in terms of the "compression rate," compression rate (%) = [set squeeze (gasket height - set groove depth)/gasket height] x 100. Since a groove depth is virtually adjusted by the spacer 330 in this test as described above, set groove depth = depth of circular hole 321 + thickness of the spacer 330.

First, as for the gaskets 100 according to the present embodiment having durometer A (Shore A) hardness of 50, 70, and 90, minimum compression rate of each gasket in which sealing performance could be maintained was measured. As a result, the minimum compression rate was 5% in a case of a sample having hardness of 50, 8% in a case of a sample having hardness of 70, and 7% in a case of a sample having hardness of 90.

Subsequently, as for the gasket 150 according to Comparative Example 1 having durometer A hardness of 70, minimum compression rate of the gasket in which sealing performance could be maintained was measured. As a result, the minimum compression rate was 14%.

Additionally, as for the gaskets 200 according to Comparative Example 2 having durometer A hardness of 50, 70, and 90, minimum compression rate of each gasket in which sealing performance could be maintained was measured. As a result, the minimum compression rate was 14% in a case of a sample having hardness of 50, 21% in a case of a sample having hardness of 70, and 28% in a case of a sample having hardness of 90.

In the above manner, it is apparent from a comparison result between the present embodiment and Comparative Example 1 that providing the gasket 100 according to the present embodiment with the third sealing surface 100c enables the minimum compression rate of the gasket in which sealing performance can be maintained to be lowered and that the gasket 100 is excellent in sealing performance.

It is also apparent from a comparison result between the present embodiment and Comparative Example 2 that forming the sealing surfaces of the gasket in equal shapes to those of the surfaces of the opposed members which these sealing surfaces come into surface contact with in a state before the gasket receives an external force brings about excellent sealing performance and a small effect on sealing performance caused by differences in rubber hardness. In general, a low hardness material having durometer A hardness of 50 or so can exert sealing performance by digging into an irregular surface but has a disadvantage in terms of durability such as being easy to fatigue. However, as described above, in the case of the present embodiment, since there is a small effect on sealing performance caused by differences in rubber hardness, the present embodiment has an advantage of a wide range of choice of a material in accordance with a use environment. Also, a low hardness material does not need to be used against a user's intention in consideration of sealing performance on a casting surface, and a general-purpose material such a material having durometer A hardness of 70 or so can be used as needed.

### (Embodiment 2)

With reference to Figs. 9 to 13, a gasket and a sealing structure according to Embodiment 2 of the present invention will be described.

<Gasket>

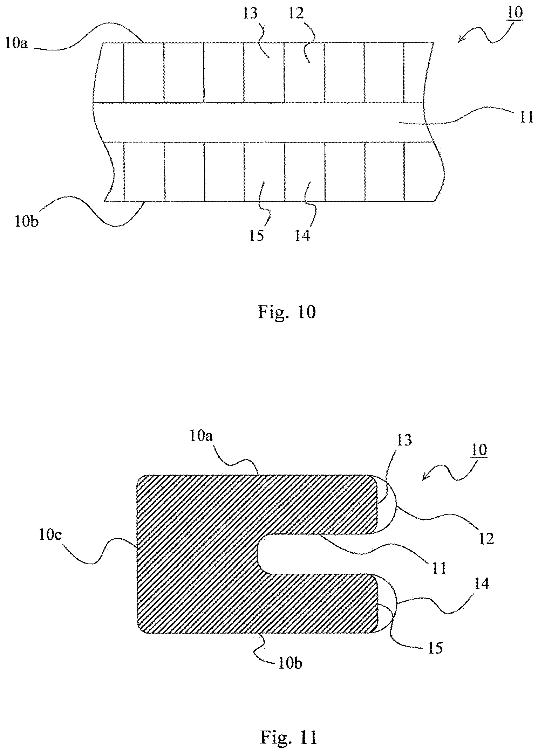

With reference to Figs. 9 to 11, a gasket 10 made of a rubber-like elastic body according to Embodiment 2 of the present invention will be described. Fig. 9 is a plan view of the gasket 10 according to Embodiment 2 of the present invention. Fig. 10 is a partial side view of an inside of the gasket 10 according to Embodiment 2 of the present invention seen in a P direction in Fig. 9. Fig. 11 is a cross-sectional view of the gasket 10 according to Embodiment 2 of the present invention and a cross-sectional view along AA in Fig. 9.

In the gasket 10 according to the present embodiment, both surfaces (an upper surface and a lower surface in Figs. 10 and 11) are formed in flat surfaces. One of them functions as a first sealing surface 10a while the other functions as a second sealing surface 10b. Also, an external side surface (a left side surface in Fig. 11) out of both side surfaces of the gasket 10 functions as a third sealing surface 10c. This third sealing surface 10c includes four flat surfaces and four curved surfaces each connecting the adjacent flat surfaces (refer to the plan view in Fig. 9).

The gasket 10 is provided with a pressure receiving groove 11 opened to an internal side surface side (an opposite side of the third sealing surface 10c) so as to be parallel to the first sealing surface 10a and the second sealing surface 10b.

Also, in the gasket 10 according to the present embodiment, on the internal side surface side, a plurality of projecting portions 12 and 14 are formed on both sides with the pressure receiving groove 11 in-between. The plurality of projecting portions 12 and 14 are provided over the entire circumference as illustrated in Fig. 9. Also, slit portions 13 and 15 are formed between the adjacent projecting portions 12 and between the adjacent projecting portions 14, respectively.

### <Sealing Structure 1>

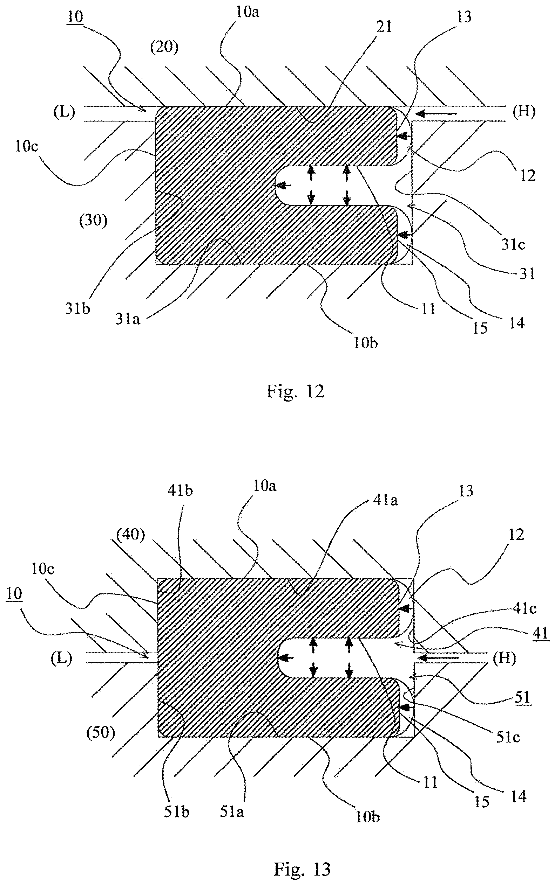

Referring to Fig. 12, an example of a sealing structure in which the gasket 10 according to the present embodiment is used will be described. In the example illustrated in Fig. 12, the gasket 10 is used to seal a gap between the case cover 20 (one member) and the case 30 (the other member). The gasket 10 is attached to the attaching groove 31 provided in the case 30. Also, in this example, the case 30 is a casting component, and a surface of the attaching groove 31 is not subjected to a process treatment and is a casting surface.

This attaching groove 31 is provided in the case 30 on a side of an opposed surface to the case cover 20. The gasket 10 is formed of a sharp along this attaching groove 31. Also, the gasket 10 is attached in a state of being compressed by the groove bottom surface 31a of the attaching groove 31 and the case cover 20. In the present embodiment, fluid as a sealed target is sealed in an inside of the gasket 10. By doing so, in Fig. 12, a right side in the figure is a high pressure side (H) while a left side is a low pressure side (L). Also, the groove bottom surface 31a of the attaching groove 31 is formed in a flat surface, and the opposed surface 21 of the case cover 20 to the case 30 is also formed in a flat surface.

By the above configuration, the flat first sealing surface 10a of the gasket 10 entirely adheres tightly to the flat opposed surface 21 of the case cover 20 while the flat second sealing surface 10b of the gasket 10 entirely adheres tightly to the flat groove bottom surface 31a of the attaching groove 31. In this manner, the first sealing surface 10a is formed in an equal flat surface shape to that of a surface of the opposed surface 21 which this first sealing surface 10a comes into surface contact with in a state before the gasket 10 receives an external force. Similarly, the second sealing surface 10b is formed in an equal flat surface shape to that of a surface of the groove bottom surface 31a which this second sealing surface 10b comes into surface contact with in a state before the gasket 10 receives an external force.

Also, the third sealing surface 10c as an external side surface of the gasket 10 almost entirely adheres tightly to the side surface 31b of the attaching groove 31 on the low pressure side (L). Here, in the present embodiment, the side surface 31b of the attaching groove 31 on the lowpressure side (L) includes four flat surfaces and four curved surfaces each connecting the adjacent flat surfaces along the external side surface of the gasket 10. Thus, the third sealing surface 10c includes a plurality of surfaces formed in equal shapes to those of surfaces of the side surface 31b which this third sealing surface 10c comes into surface contact with in a state before the gasket 10 receives an external force.

As is apparent from Fig. 12, a cross-section of the gasket 10 according to the present embodiment is formed approximately in a rectangular shape. The gasket 10 except a side surface on the high pressure side (H) is adapted to almost entirely adhere tightly to sealing target surfaces (the groove bottom surface 31a of the attaching groove 31, the side surface 31b on the low pressure side (L), and the opposed surface 21 of the case cover 20). Also, in the present embodiment, the plurality of projecting portions 12 and 14 provided in the gasket 10 adhere tightly to a side surface 31c of the attaching groove 31 on the high pressure side (H).

Also, the pressure receiving groove 11 and the slit portions 13 and 15 of the gasket 10 are in a state of receiving sealing fluid pressure since fluid as a sealed target enters them.

### <Sealing Structure 2>

Referring to Fig. 13, another example of a sealing structure in which the gasket 10 according to the present embodiment is used will be described. In the example illustrated in Fig. 13, the gasket 10 is used to seal a gap between the case cover 40 (one member) and the case 50 (the other member). The gasket 10 is attached to the attaching grooves 41 and 51 provided respectively in both the members. Also, in this example, the case cover 40 and the case 50 are casting components, and surfaces of the attaching grooves 41 and 51 are not subjected to a process treatment and are casting surfaces.

These attaching grooves 41 and 51 are provided on an opposed surface to the case 50 in the case cover 40 and on an opposed surface to the case cover 40 in the case 50, respectively. The gasket 10 is formed of a sharp along these attaching grooves 41 and 51. Also, the gasket 10 is attached in a state of being compressed by the groove bottom surface 41a of the attaching groove 41 and the groove bottom surface 51a of the attaching groove 51. In the present embodiment, fluid as a sealed target is sealed in an inside of the gasket 10. By doing so, in Fig. 13, a right side in the figure is a high pressure side (H) while a left side is a low pressure side (L). Also, both the groove bottom surface 41a of the attaching groove 41 and the groove bottom surface 51a of the attaching groove 51 are formed in flat surfaces.

By the above configuration, the flat first sealing surface 10a of the gasket 10 entirely adheres tightly to the flat groove bottom surface 41a of the attaching groove 41 of the case cover 40 while the flat second sealing surfaces 10b of the gasket 10 entirely adheres tightly to the flat groove bottom surface 51a of the attaching groove 51 of the case 50. In this manner, the first sealing surface 10a is formed in an equal flat surface shape to that of a surface of the groove bottom surface 41a which this first sealing surface 10a comes into surface contact with in a state before the gasket 10 receives an external force. Similarly, the second sealing surface 10b is formed in an equal flat surface shape to that of a surface of the groove bottom surface 51a which this second sealing surface 10b comes into surface contact with in a state before the gasket 10 receives an external force.

Also, the third sealing surface 10c as an external side surface of the gasket 10 almost entirely adheres tightly to the side surface 41b of the attaching groove 41 on the low pressure side (L) and the side surface 51b of the attaching groove 51 on the low pressure side (L). Here, in the present embodiment, the side surface 41b of the attaching groove 41 on the low pressure side (L) and the side surface 51b of the attaching groove 51 on the low pressure side (L) include four flat surfaces and four curved surfaces each connecting the adjacent flat surfaces along the external side surface of the gasket 10. Thus, the third sealing surface 10c includes a plurality of surfaces formed in equal shapes to those of surfaces of the side surfaces 41b and 51b which this third sealing surface 10c comes into surface contact with in a state before the gasket 10 receives an external force.

As is apparent from Fig. 13, a cross-section of the gasket 10 according to the present embodiment is formed approximately in a rectangular shape. The gasket 10 except a side surface on the high pressure side (H) is adapted to almost entirely adhere tightly to sealing target surfaces (the groove bottom surfaces 41a and 51a of the attaching grooves 41 and 51 and the side surfaces 41b and 51b on the low pressure side (L)). Also, in the present embodiment, the plurality of projecting portions 12 and 14 provided in the gasket 10 adhere tightly to a side surface 41c of the attaching groove 41 on the high pressure side (H) and a side surface 51c of the attaching groove 51 on the high pressure side (H), respectively.

Also, the pressure receiving groove 11 and the slit portions 13 and 15 of the gasket 10 are in a state of receiving sealing fluid pressure since fluid as a sealed target enters them.

### <Excellent Points of Gasket and Sealing Structures According to Present Embodiment>

As described above, with the present embodiment, the gasket 10 made of a rubber-like elastic body is configured to cause the first sealing surface 10a, the second sealing surface 10b, and the third sealing surface 10c of the gasket 10 to almost entirely adhere tightly to the sealing target surfaces. Meanwhile, since correspondence between each sealing surface and each sealing target surface is apparent from Figs. 12 and 13 and the above description, description thereof is omitted. The same is true of the following description.

Also, the first sealing surface 10a, the second sealing surface 10b, and the third sealing surface 10c are formed in equal shapes to those of the surfaces (sealing target surfaces) of the opposed members which these surfaces come into surface contact with in a state before the gasket 10 receives an external force. Further, since an inner wall surface of the pressure receiving groove 11 receives sealing fluid pressure, the first sealing surface 10a and the second sealing surface 10b are in a state of being pressed against the sealing target surfaces. Still further, since the inner wall surface of the pressure receiving groove 11 and the slit portions 13 and 15 receive sealing fluid pressure, the third sealing surface 10c is also in a state of being pressed against the sealing target surfaces.

Accordingly, even in a case where the sealing target surface is a surface provided with irregularities such as a casting surface (even in a case where the sealing target surface is provided with porosity), the gasket 10 digs into the recess, an upper surface of the recess is covered with the gasket 10, and thus stable sealing performance can be exerted.

Also, since the gasket 10 is provided with the pressure receiving groove 11 so as to be parallel to the first sealing surface 10a and the second sealing surface 10b, both compression rate and filling rate can be satisfied appropriately. Accordingly, there is no need for a large force at the time of assembling the two members (the case cover 20 or 40 and the case 30 or 50) and the gasket 10, and desired sealing performance can be obtained without deformation of the two members.

Also, the present embodiment adopts a configuration in which the plurality of projecting portions 12 and 14 that adhere tightly to side surfaces of the attaching grooves 31, 41, and 51 are provided on both sides with the pressure receiving groove 11 in-between on a side of a surface of the gasket 10 receiving sealing fluid pressure (that is, on the high pressure side (H)).

This can stabilize an attaching state of the gasket 10 to the attaching grooves 31, 41, and 51. This can also restrict coming off of the gasket 10 from the attaching grooves 31, 41, and 51 at the time of assembling process and so on. This can further stabilize sealing performance by the third sealing surface 10c against the side surfaces 31b, 41b, and 51b of the attaching grooves 31, 41, and 51.

It is to be noted that the projecting portions 12 and 14 do not need to be provided as long as attaching stability and sealing performance of the gasket 10 against the attaching grooves 31, 41, and 51 can be obtained sufficiently. That is, a gap may be formed between the gasket 10 and the side surfaces of the attaching grooves 31, 41, and 51 on the high pressure side (H). In this case as well, since the gasket 10 receives sealing fluid pressure from the high pressure side (H), the third sealing surface 10 is in a state of being pressed against the sealing target surfaces.

### Reference Signs List

- 10, 100: gasket
- 10a, 100a: first sealing surface
- 10b, 100b: second sealing surface
- 10c, 100c: third sealing surface
- 11: pressure receiving groove
- 12, 14: projecting portion
- 13, 15: slit portion
- 20, 40: case cover
- 21: opposed surface
- 30, 50: case
- 31, 41, 51: attaching groove
- 31a, 41a, 51a: groove bottom surface
- 31b, 41b, 51b: side surface
- 31c, 41c, 51c: side surface
- 150, 200: gasket
- 300: jig
- 310: first metal plate
- 311: through hole
- 320: second metal plate
- 321: circular hole
- 330: spacer
- 400: water tank
- 410: water
- 500: pipe
- 510: pressure gauge

## Claims

1. A sealing structure comprising:
two members (20, 30; 40, 50) at least either of which is provided with an attaching groove (31; 41, 51) whose surface is a casting surface; and
a gasket (10) made of a rubber-like elastic body attached to the attaching groove (31; 41, 51) to seal a gap between these two members (20, 30; 40, 50),
wherein the gasket (10) includes a first sealing surface (10a) coming into surface contact with a surface of a first member out of the two members (20, 30; 40, 50);
a second sealing surface (10b) coming into surface contact with a surface of a second member out of the two members (20, 30; 40, 50); and
a third sealing surface (10c) coming into surface contact with a side surface of the attaching groove (31; 41, 51) on an opposite side of a side on which sealing fluid pressure is generated, and
wherein
said side on which sealing fluid pressure is generated is an inner circumferential side of the attaching groove (31; 41, 51) which is an annular groove;
said third sealing surfaces (10c) is an outer circumferential surface of said gasket (10) which is an annular gasket; and
the gasket (10) includes a pressure receiving groove (11) opened to a side receiving the sealing fluid pressure which is an opposite side of the third sealing surface (10c) and provided so as to be parallel to the first sealing surfaces (10a) and the second sealing surface (10b),
**characterized in that**
the first sealing surfaces (10a), the second sealing surface (10b), and the third sealing surfaces (10c) are formed in equal shapes to those of surfaces of opposed members which these sealing surfaces come into surface contact with in a state before the gasket (10) receives an external force, respectively, and the side of the gasket (10) receiving the sealing fluid pressure is provided with a plurality of projecting portions (12, 14) coming into close contact with a side surface of the attaching groove (31; 41, 51) on the side on which the sealing fluid pressure is generated on both sides with the pressure receiving groove (11) in-between, for restricting coming off of the gasket (10) from the attaching grooves (31; 41; 51) at the time of assembling.

## Patentansprüche

1. Dichtaufbau, der Folgendes aufweist:
zwei Bauteile (20, 30; 40, 50), von denen zumindest eines mit einer Anbringungsnut (31; 41, 51) versehen ist, deren Oberfläche eine Gussoberfläche ist; und
eine Dichtung (10), die aus einem gummiartigen elastischen Körper hergestellt ist, der an der Anbringungsnut (31; 41, 51) angebracht ist, um einen Spalt zwischen diesen zwei Bauteilen (20, 30; 40, 50) abzudichten,
wobei die Dichtung (10) Folgendes aufweist
eine erste Dichtfläche (10a), die mit einer Oberfläche eines ersten Bauteils aus den zwei Bauteilen (20, 30; 40, 50) in Flächenkontakt kommt;
eine zweite Dichtfläche (10b), die mit einer Oberfläche eines zweiten Bauteils aus den zwei Bauteilen (20, 30; 40, 50) in Flächenkontakt kommt; und
eine dritte Dichtfläche (10c), die auf einer entgegengesetzten Seite, an welcher ein Dichtfluiddruck erzeugt wird, mit einer Seitenfläche der Anbringungsnut (31; 41, 51) in Flächenkontakt kommt, und
wobei
die Seite, auf der ein Dichtfluiddruck erzeugt wird, eine Innenumfangsseite der Anbringungsnut (31; 41, 51) ist, welche eine ringförmige Nut ist;
die dritte Dichtfläche (10c) eine Außenumfangsfläche der Dichtung (10) ist, welche eine ringförmige Dichtung ist; und
die Dichtung (10) eine Druckaufnahmenut (11) aufweist, die zu einer Seite hin geöffnet ist, die den Dichtfluiddruck aufnimmt, welche eine entgegengesetzte Seite der dritten Dichtfläche (10c) ist, und vorgesehen ist, um parallel zu der ersten Dichtfläche (10a) und der zweiten Dichtfläche (10b) zu sein,
**dadurch gekennzeichnet, dass**
die erste Dichtfläche (10a), die zweite Dichtfläche (10b) und die dritte Dichtfläche (10c) in gleichen Formen zu jenen der Flächen von gegenüberliegenden Bauteilen ausgebildet sind, mit denen diese Dichtflächen in Flächenkontakt kommen, in einem Zustand, bevor die Dichtung (10) eine externe Kraft jeweils aufnimmt, und
die Seite der Dichtung (10), die den Dichtfluiddruck aufnimmt, mit einer Vielzahl von Vorsprungsabschnitten (12, 14) versehen ist, die in engen Kontakt mit einer Seitenfläche der Anbringungsnut (31; 41, 51) auf der Seite kommen, auf der der Dichtfluiddruck erzeugt wird, auf beiden Seiten mit der Druckaufnahmenut (11) dazwischen, zum Beschränken eines Abgehens der Dichtung von den Anbringungsnuten (31; 41; 51) zur Zeit eines Zusammenbaus.

## Revendications

1. Structure d'étanchéité comprenant :
deux éléments (20, 30 ; 40, 50) dont au moins chacun est prévu avec une rainure de fixation (31 ; 41, 51) dont la surface est une surface de coulée ; et
un joint (10) réalisé avec un corps élastique de type caoutchouc fixé sur la rainure de fixation (31 ; 41, 51) pour sceller un espace entre ces deux éléments (20, 30 ; 40, 50),
dans laquelle le joint (10) comprend :
une première surface d'étanchéité (10a) venant en contact de surface avec une surface d'un premier élément parmi les deux éléments (20, 30 ; 40, 50) ;
une deuxième surface d'étanchéité (10b) venant en contact de surface avec une surface d'un second élément parmi les deux éléments (20, 30 ; 40, 50) ; et
une troisième surface d'étanchéité (10c) venant en contact de surface avec une surface latérale de la rainure de fixation (31 ; 41, 51) sur un côté opposé d'un côté sur lequel la pression de fluide d'étanchéité est générée, et
dans laquelle
ledit côté sur lequel ladite pression de fluide d'étanchéité est générée, est un côté circonférentiel interne de la rainure de fixation (31 ; 41, 51) qui est une rainure annulaire ;
ladite troisième surface d'étanchéité (10c) est une surface circonférentielle externe dudit joint (10) qui est un joint annulaire ; et
le joint (10) comprend une rainure de réception de pression (11) ouverte vers un côté recevant la pression de fluide d'étanchéité qui est un côté opposé à la troisième surface d'étanchéité (10c), et prévu pour être parallèle à la première surface d'étanchéité (10a) et la deuxième surface d'étanchéité (10b),
**caractérisée en ce que**
la première surface d'étanchéité (10a), la deuxième surface d'étanchéité (10b) et la troisième surface d'étanchéité (10c) sont formées selon des formes identiques à celles des surfaces des éléments opposés avec lesquelles ces surfaces d'étanchéité viennent en contact de surface dans un état avant que le joint (10) ne reçoive une force externe, respectivement, et
le côté du joint (10) recevant la pression de fluide d'étanchéité est prévu avec une pluralité de parties en saillie (12, 14) venant en contact immédiat avec une surface latérale de la rainure de fixation (31 ; 41, 51) du côté sur lequel la pression de fluide d'étanchéité est générée des deux côtés avec la rainure de réception de pression (11) entre elles, pour limiter la sortie du joint (10) des rainures de fixation (31 ; 41, 51) au moment de l'assemblage.
